(19) Europäisches Patentamt
European Patent Office
Office européen des brevets

(11) **EP 4 398 140 A1**

(12) **EUROPEAN PATENT APPLICATION**

(43) Date of publication:
**10.07.2024 Bulletin 2024/28**

(21) Application number: **23150282.4**

(22) Date of filing: **04.01.2023**

(51) International Patent Classification (IPC):
**G06F 21/62** (2013.01)   **H04L 9/40** (2022.01)

(52) Cooperative Patent Classification (CPC):
**G06F 21/6254; H04L 63/0407**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **PRIVACY KNOWLEDGE BASE**

(57)     A computer-implemented method is provided for use in anonymizing data, the data having a plurality of data attributes, or fields. The method is performed by a computer system 501 configured to provide anonymized data to a plurality of different analysis functions 515, 517, 519, 521 for analyzing the data, the data being anonymized by applying one or more of a plurality of predetermined anonymization protocols, each protocol having an anonymization protocol parameter that can be specified in order to determine the degree of anonymization applied to the data. The method comprises determining, for each analysis function: privacy settings, each comprising a unique combination of anonymization protocol applied to the data, anonymization protocol parameter value and data attribute; a privacy score P for each of the determined unique combinations of anonymization protocol applied to the data, anonymization protocol parameter value and data attribute; and a data utility score U for each of the determined unique combinations of anonymization protocol applied to the data, anonymization protocol parameter value and data attribute. The method further comprises processing the results, for each analysis function, by: ranking the unique combinations of anonymization protocol, anonymization protocol parameter and data attribute based on the privacy score and/or data utility score; and storing the ranked results for subsequent selection and use by the computer system to process an anonymized set of data, anonymized according to an identified anonymization protocol, according to the analysis function. A corresponding computer system and computer program are also provided.

Fig 5

EP 4 398 140 A1

**Description**

TECHNICAL FIELD

The invention relates to a computer-implemented method for use in anonymizing data. A corresponding computer system and computer program are also provided.

BACKGROUND

Sharing cyber security data and threat intelligence among different companies and organisations is very important to improve the capacity of each organisation to defend their networks and IT assets against potential cyber-attacks and raise awareness of emerging security threats. Security analysts can already perform useful analytics using their own organisation's data to detect anomalies or recognise known attack patterns. If security data from other organisations can be merged or aggregated, much more useful information and insights can be derived from the analysis and used to prioritise specific security incidents, or to prepare the organisation and mitigate the impacts of incoming security threats, e.g. malware outbreaks.

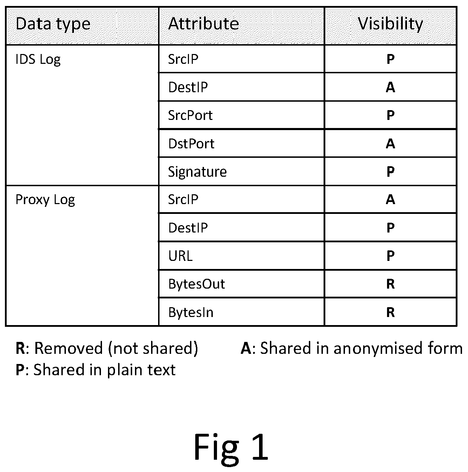

Data owners may choose to anonymise parts of their data in order to address potential privacy concerns that may arise from sharing the data with third parties. Data sharing policies can be used to express the data owner's wish on which of the information or data attributes should only be shared in anonymised form. Figure 1 shows an example where a data owner is willing to share the IDS (Intrusion Detection System) logs 101 of his/her organisation but with the restrictions that only the source IP, source port and (detected) IDS signature names will be provided in plain text. Other attributes such as the destination IP and destination port are deemed too sensitive and should only be shared in anonymised form. In case of their proxy logs, the source IP needs to be anonymised and information about the number of outgoing and incoming packet bytes cannot be shared at all (i.e. removed from the dataset) while the destination IP and URL can be shared in plain text.

However, the more data is anonymised the less useful this data becomes when using it to perform analysis functions.

Accordingly, a method of facilitating the process to reduce the privacy risk (i.e. re-identification risk) by applying suitable privacy models on anonymised datasets is desirable whilst preserving acceptable level of data utility when anonymising this data.

SUMMARY OF INVENTION

The invention is defined in the independent claims. Optional features of the invention are set out in the dependent claims.

The present invention describes a method to create a Privacy Knowledge Base that can facilitate privacy-preserving analytics services in maintaining acceptable data utility. The implementation steps are: define unique combination of privacy algorithms and parameters for relevant data fields; determine the corresponding privacy scores via a risk assessment process and determine the corresponding data utility scores for each type of analytics.

According to a first aspect a computer-implemented method is provided for use in anonymizing data, the data having a plurality of data attributes, or fields.

The method is performed by a computer system configured to provide anonymized data to a plurality of different analysis functions for analyzing the data, the data being anonymized by applying one or more of a plurality of predetermined anonymization protocols, each protocol having an anonymization protocol parameter that can be specified in order to determine the degree of anonymization applied to the data.

The method comprises determining, for each analysis function: privacy settings, each comprising a unique combination of anonymization protocol applied to the data, anonymization protocol parameter value and data attribute; a privacy score for each of the determined unique combinations of anonymization protocol applied to the data, anonymization protocol parameter value and data attribute; and a data utility score for each of the determined unique combinations of anonymization protocol applied to the data, anonymization protocol parameter value and data attribute.

The method further comprises processing the results, for each analysis function, by: ranking the unique combinations of anonymization protocol, anonymization protocol parameter and data attribute based on the privacy score and/or data utility score; and storing the ranked results for subsequent selection and use by the computer system to process an anonymized set of data, anonymized according to an identified anonymization protocol, according to the analysis function.

Embodiments may therefore automate the population of a Privacy Knowledge Base to allow an analytics system to provide optimal privacy settings based on user requirements.

Data utility is a term describing the value of a given data release or set as an analytical resource. This comprises the data's analytical completeness and its analytical validity. Disclosure control methods usually have an adverse effect on data utility. Ideally, the goal of any disclosure control regime should be to maximise data utility whilst minimizing disclosure risk. In practice disclosure control decisions are a trade-off between utility and disclosure risk.

It is very difficult for data owners to strike the right balance between privacy and data utility (i.e. fine-tuning the algorithm parameters) without any further guidance and deep knowledge of the privacy/anonymisation algorithms. By determining privacy and data utility scores for each function and for each combination of anonymization protocol, anonymization protocol parameter value and data attribute it is possible to build a risk score of privacy vs. data utility for each security/analytics function a user may want to apply to analyse specified data. This provides a score of risk of exposing privacy of the user based on the security/analytics function requirements and properties. The impact on data utility will depend on many factors such as selected anonymization protocols (also known as privacy algorithms), the algorithm/protocol parameters, type and characteristics/statistical properties of the typical dataset e.g. regarding its sparsity, uniqueness, all in combination with each analytics function that will consume the dataset. Determining the privacy and quality of the data after applying anonymization in relation with the combinations of selected anonymization algorithms, algorithm parameters and analytics functions allows these impacts to be taken into account. For the same set of privacy algorithms and parameters, depending on the associated analytics function, the method will produce different privacy risk and data utility scores. This is important to allow users get the most (i.e. the highest data utility) out of the data while still preserving a certain level of privacy.

The analysis performed using the processed results may be cyber security analysis for detecting and mitigating against potential cyber-attacks.

Embodiments may provide the benefits of facilitating the process to reduce privacy risk (i.e. re-identification risk) by applying suitable privacy models on anonymised datasets, whilst providing an objective view of the dependency between privacy requirements and the type of analytics being performed. This helps data owners to strike the right balance between privacy and data utility.

According to a second aspect there is provided a computer system configured to carry out the method of the first aspect.

According to a third aspect, a non-transitory computer readable medium having stored thereon a computer program that, when run on a system according to the second, causes the system to perform methods according to the first aspect.

BRIEF DESCRIPTION OF THE DRAWINGS

The disclosure will be further described, by way of example only, with reference to the accompanying drawings, in which:

Figure 1 illustrates an example privacy policy for security logs;
Figure 2 illustrates anonymisation of patient data using masking and generalisation techniques;
Figure 3 illustrates an overview of existing privacy models;

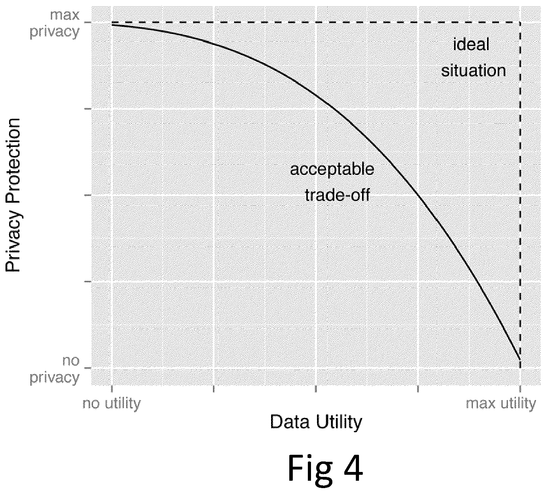

Figure 4 illustrates the relationship between privacy level and data utility;

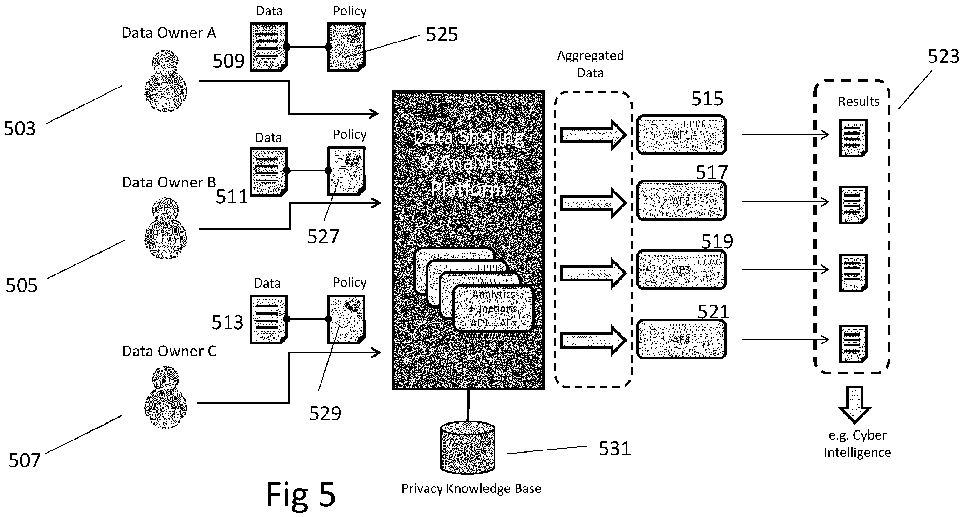

Figure 5 illustrates a computer implemented data sharing and analytics platform;
Figure 6 illustrates a populated Privacy Knowledge Base table;
Figure 7 illustrates a populated Privacy Knowledge Base table having different privacy algorithms applied to different attributes of the data;
Figure 8 illustrates an example method for populating the Privacy Knowledge Base;
Figure 9 illustrates an example of available privacy settings for an analytics function;
Figure 10 illustrates an example method for calculating a privacy score for a given analytics function;
Figure 11 illustrates a Privacy Knowledge Base table populated with privacy scores;
Figure 12 illustrates an example method for calculating data utility scores for the Privacy Knowledge Base; and
Figure 13 illustrates an example of a Privacy Knowledge Base before and after consolidation.

DETAILED DESCRIPTION OF THE INVENTION

Embodiments and related technology helpful for understanding and implementing the embodiments will now be described with reference to the Figures. The same or similar reference numerals are used to refer to the same or similar components across different Figures.

Generally, embodiments are provided in the context of analytics on data sets which require the preservation of privacy for subjects of the data set (e.g. personal information etc.). Existing techniques use simple anonymisation which can be fallible if incompletely applied and results in data losing context/meaning and therefore utility. Privacy models are known in the art such as k-Anonymity and i-Diversity though these require considerable configuration and tuning to provide a trade-off between degree of privacy and data utility. It has been recognised that the analytics to be performed on data necessarily informs a selected approach to anonymisation with attributes such as data sparsity, uniqueness etc. influencing the parameterisation of the anonymised data to ensure faithful representation of the original data when anonymised.

Embodiments provide for a selection and optimisation of privacy model parameters based on both a specification of a degree of privacy required for a dataset and a selection of analytics functions with objectives. Embodiments model data utility for each of multiple different privacy configurations to select a local optimum privacy configuration for analytical function efficacy.

One thing that each data owner needs to consider when anonymising their data is to ensure that the resulting sanitised or anonymised datasets can still be used for further processing and analytics, particularly given that this is the main purpose of sharing the data in the first place. This means that the data utility, or analytics utility, needs to be maintained at an acceptable level while at the same time providing the highest possible privacy protection. In general one of the following anonymisation or transformation techniques can be used to hide sensitive information:

Masking: replaces sensitive information with random characters or data while retaining the original data format. For example, the IP address '132.123.112.58' could be transformed to '132.123.YYY.ZZZ' in order to prevent unique identification of the host machine.

Suppression: removes selected information to protect the privacy of the entities (e.g. individuals, organisations, etc.). Suppression is normally applied to directly identifying information. For example, a user's full name or username attribute is removed completely from the data records.

Generalisation: is a technique to remove specificity from the data. For example, the port number '80' is generalised to '[50,100[', the attack type 'Ping of Death' is generalised to 'DoS (Denial of Service)'.

Tokenisation: is a technique to substitute a sensitive data element with a non-sensitive equivalent, referred to as a token that has no extrinsic or exploitable meaning or value. The underlying tokenisation system allows mapping the tokens back to the sensitive (original) data and should therefore be adequately protected. For example, the username 'james.smith11' could be tokenised to 'USER-002'.

When using one of the anonymisation techniques listed above the data owner or analyst needs to make sure that the related analysis function (also known as an analytics function) is capable of dealing with the transformed format. For example, the function is able to deal with alphabets as part of an IP address rather than digits only. If that is not the case, replacing the sensitive part of the IP address with random digits instead would be a better choice, e.g. a method called Format-Preserving Encryption could be used to achieve this.

The main goal of such anonymisation techniques is to hide or blur the original value of identifying or sensitive data attributes. However applying such techniques alone may not be enough to protect the privacy of involved entities. Depending on the data and any external or side knowledge about the entity a number of targeted attacks could succeed in reidentifying the entities or deriving sensitive information from anonymised or transformed data. Examples of attacks on anonymisation-based systems include:

- Homogeneity attack
- Background knowledge attack
- Minimality attack
- Unsorted matching attack
- Complementary release attack
- Temporal attack

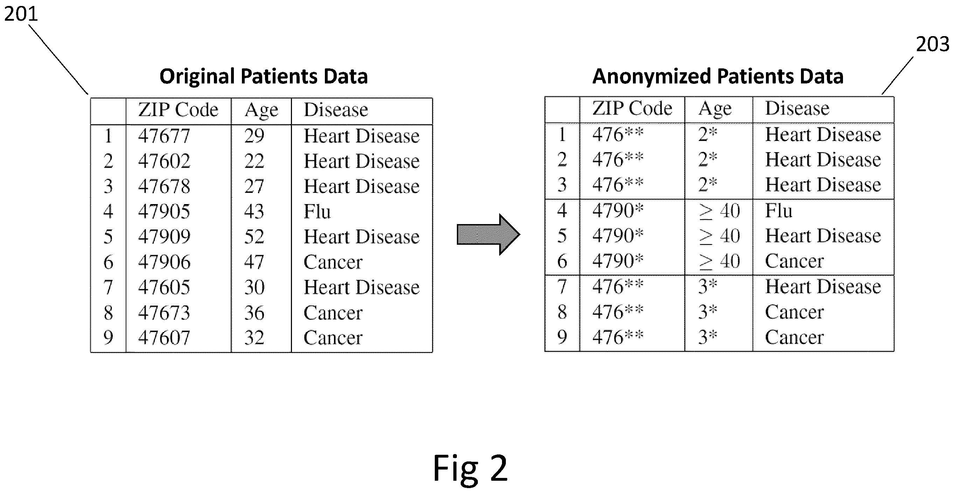

Figure 2 shows an example of anonymisation of healthcare patient data. The left table 201 shows the data in its original format while the right table 203 shows its anonymised version after applying masking and generalisation techniques on the ZIP code and age information. A homogeneity and background knowledge attack can be performed as follows:

Alice knows that Bob is a 27-year old man living in area with ZIP code 47678. Alice also knows that Bob's records are in the table. From the anonymised data table 203 Alice can conclude that Bob corresponds to one of the first three records, and thus must have heart disease. The attack shows that a disclosure of sensitive information about Bob (i.e. he has heart disease) is possible even if the data is anonymised.

Therefore the use of anonymisation techniques should normally be coupled with suitable privacy models and algorithms in order to prevent the disclosure of one's identity and sensitive information. A number of privacy models have been developed to address this issue. A privacy model (or its associated algorithm) normally provides protection against a specific type of disclosure:

Identity disclosure: the identity of the individuals or entities would directly or indirectly be revealed from the data.

Attribute disclosure: sensitive information about the individuals or entities would be revealed from the data.

Membership disclosure: the inclusion (or exclusion) of the individual's or entity's records in the data would be revealed.

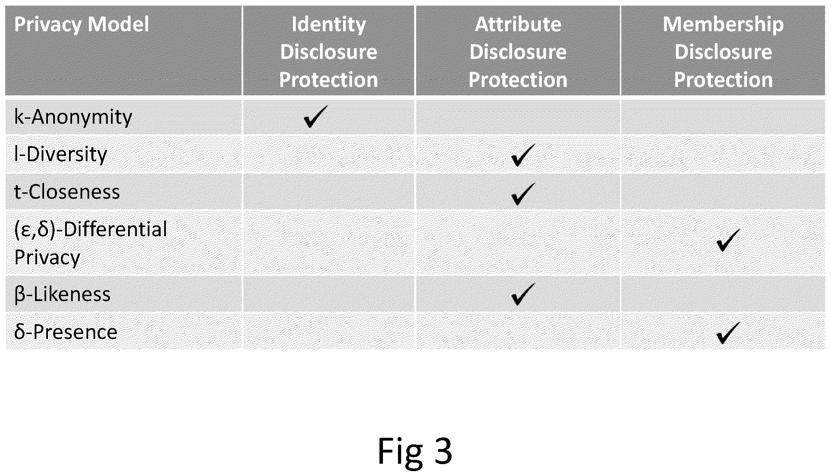

Figure 3 provides an overview of existing privacy models such as k-Anonymity, 1-Diversity or Differential Privacy, along with the type of disclosure protection each model provides. In order to provide effective privacy protection it is therefore necessary to apply a privacy model on the correct type of information (i.e. data attribute or field). In general each data field or attribute of a dataset (e.g. security log) can be categorised as follows:

Insensitive: no special protection or anonymisation is needed.

Identifying: its disclosure directly reveals the individual's or entity's identity, e.g. full name, username, company name, etc.

Quasi-identifying: its disclosure may indirectly reveal the individual's or entity's identity especially if it is combined with other attributes or external background knowledge. Examples of quasi-identifying attributes include IP address, hostname, laptop ID/barcode, etc.

Sensitive: its disclosure reveals sensitive information about the individual or entity, e.g. operating system, software patch version, etc.

As mentioned above, data owners need to maintain acceptable level of data utility when anonymising their data. This is due to the existing inverse correlation between privacy and data utility (usefulness of data) as shown in **Error! Reference source not found.**. In particular, if any privacy model needs to be applied on the data to protect it against targeted privacy attacks, too much protection may lead to poor data utility which eventually makes the data less useful for analytics. The ability to adjust the privacy/utility trade-off would benefit the data owners, analysts and other stakeholders substantially.

Applying anonymisation techniques on data may not eliminate the risk of re-identification if the process is not combined with suitable privacy models. Privacy models and algorithms such as k-Anonymity or 1-Diversity need to be carefully configured (i.e. parameter tuning) to achieve the best trade-off between privacy level and data utility.

The variety of analytics functions that will consume the anonymised datasets (to generate results) may influence the choice of parameters used in the privacy models significantly. Statistical properties of each dataset, e.g. sparsity, uniqueness, etc., may also influence the choice of parameters used in the privacy models significantly.

Embodiments describe a method to create a Privacy Knowledge Base that can facilitate the selection of optimal parameters for privacy-preserving anonymisation algorithms. Such a Privacy Knowledge Base can then be integrated and used within a typical data sharing and analytics platform 501 of the sort shown in **Error! Reference source not found.5.** Such a platform allows multiple parties (i.e. data owners) 503, 505, 507 to upload and share their security data (e.g. IDS logs, Firewall logs, etc.) 509, 511, 513 and make them available to use and aggregate the data in conjunction with in-built Analytics Functions (AF) 515, 517, 519, 521, also known as analysis functions, to produce some results 523, e.g. detection of malware outbreak, identification of malicious hosts, etc. In general the platform 501 may also be used for other types of data which contain sensitive and personal information, e.g. for analysing healthcare data, etc.

Each data owner 503, 505, 507, assigns a privacy policy 525, 527, 529 to their data 509, 511, 513 in order to control how each data attribute should be presented (i.e. in plain text or anonymised form) before they are shared with the platform users (e.g. analysts). In order to minimise the re-identification or disclosure risk, suitable privacy models and algorithms need to be applied when anonymising relevant data attributes. The parameterisation of such privacy algorithms can either be expressed within the data privacy policy or stored within the platform and applied on-the-fly when the data are consumed by specific analytics functions. The re-identification risk represents the probability of any entity (e.g. individuals, organisations, etc.) in the data being re-identified or their sensitive information being disclosed.

The data sharing and analytics platform 501 may be implemented as a computer system comprising one or more processors, memory and storage. The platform may be implemented in the cloud, on a server or in any suitable manner. The analytics functions may be applied by the analytics platform 501 or may be applied by another computer system in network communication with the analytics platform.

The Privacy Knowledge Base 531, implemented as a database or table, contains the optimal settings and parameters for privacy-preserving anonymisation algorithms to achieve certain levels of data utility. In principle data utility strongly depends on which analytics functions are used to consume the (anonymised) data for producing the results. The privacy algorithm settings thus need to be optimised for each analytics function to achieve the best possible outcome. It is assumed that the anonymisation process will only apply to those data fields or attributes that were categorised as either quasi-identifying or sensitive. Original values of identifying attributes will be completely removed from the data or redacted in order to eliminate any risk of re-identification, while insensitive attributes can remain unchanged (i.e. plain text). In cases where tokenisation or masking (with random alphabets or numbers) techniques are used to anonymise a data attribute, the platform will categorise it as quasi-identifying attribute.

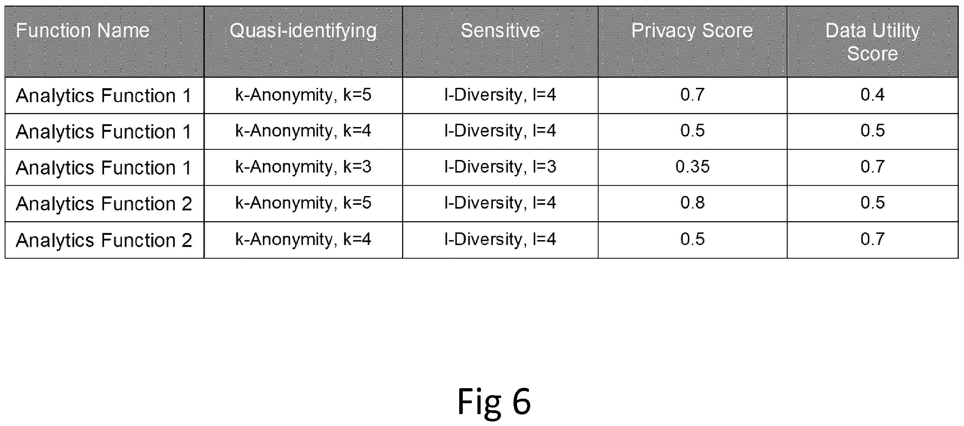

Figure 6 shows an example of a (populated) Privacy Knowledge Base. As shown, a privacy score P and data utility score U are assigned to each combination of analytics function (AF) and privacy settings for quasi-identifying and sensitive data attributes. In this example, both the privacy score and data utility score are provided on a scale from 0.0 to 1.0, with a higher number indicating better (or higher) privacy/data utility. The procedure for creating or populating the Privacy Knowledge Base is referred as "Privacy Models Assessment" (PMA). The PMA procedure assumes that each privacy model or algorithm can be applied either only to quasi-identifiers or sensitive attributes or to both attribute types, e.g. k-Anonymity for quasi-identifiers and/or sensitive attribute, 1-Diversity for sensitive attributes only. This is due the fact that some algorithms were specially designed to address the weakness of other algorithms in protecting certain type of attributes. For example, 1-Diversity was created to further k-Anonymity in protecting sensitive attributes against homogeneity and background-knowledge attacks.

Each algorithm has specific parameters (e.g. $k$ in k-Anonymity, $l$ in 1-Diversity) to adjust its privacy protection level. In the case of the k-Anonymity algorithm, a larger k value would normally result in better privacy protection (i.e. higher privacy score) but at the cost of data utility (i.e. lower utility score). For example, in relation to k-Anonymity, the basis for the algorithm is that a database table is anonymous if every search for identifying information results in a group of at least k candidate records. The k value in k-anonymity is thus the privacy parameter which determines the minimum group size. Groups of candidate records form anonymity sets of identifiers in the database table.

These factors will be taken into account by the PMA procedure when determining the associated privacy and data utility scores. Furthermore each attribute within a dataset may possess different statistical patterns and properties, e.g. much less variations (i.e. unique values) in destination port numbers are expected in comparison to source port numbers found in a Firewall log.

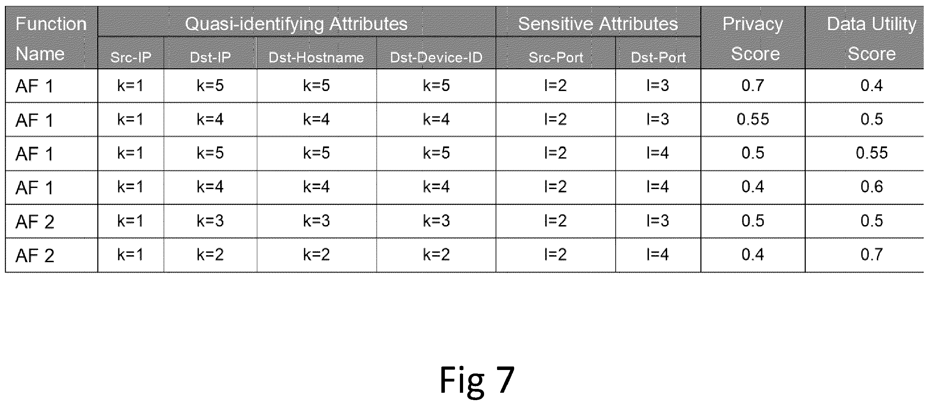

Therefore each quasi-identifying or sensitive attribute may also be assigned its own privacy algorithm parameter in order to achieve the expected privacy score, as shown in Figure 7.

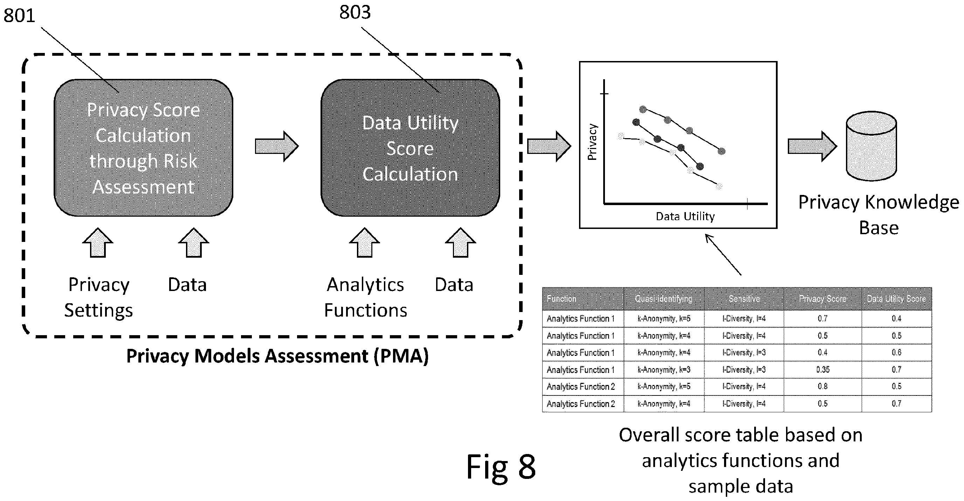

Figure 8 shows the two main steps of the PMA procedure. The PMA procedure may be carried out by the data sharing and analytics platform 501, or it could be carried out by another computing system.

The first step 801 deals with the calculation of the privacy score P that can be achieved by the selected privacy settings when being applied together on the quasi-identifying and sensitive attributes. This can be performed, for example, through a risk assessment process where an estimate of so-called re-identification risk R is computed based on the statistic distribution of the relevant attribute values within a typical dataset. The risk represents the probability of any entity (e.g. individuals, organisations, etc.) in the data being re-identified or their sensitive information being disclosed. Enough samples of representative datasets should be provided in order to provide good risk estimates. A higher risk value R means higher disclosure risk and thus less privacy protection. R may range between a minimum and a maximum, for example between 0.0 (full privacy) and 1.0 (no privacy). Once the risk value is estimated, the privacy score P can be directly determined as:

$$P = 1 - R$$

The second step 803 deals with the calculation of the data utility score U that can be observed by the analytics function when consuming the dataset that has previously been anonymised using the selected privacy settings. Enough samples of datasets should be provided in order to achieve a representative data utility score that takes the statistical pattern and properties of typical datasets into account.

A Privacy Setting is defined here as a possible combination of one or more privacy models or algorithms (such as k-Anonymity and/or l-Diversity) along with their specific parameters that can be used to protect a fixed list of quasi-identifying and sensitive attributes, which in turn is specific to each analytics function. As mentioned earlier a single privacy algorithm may also be used for both types of attributes.

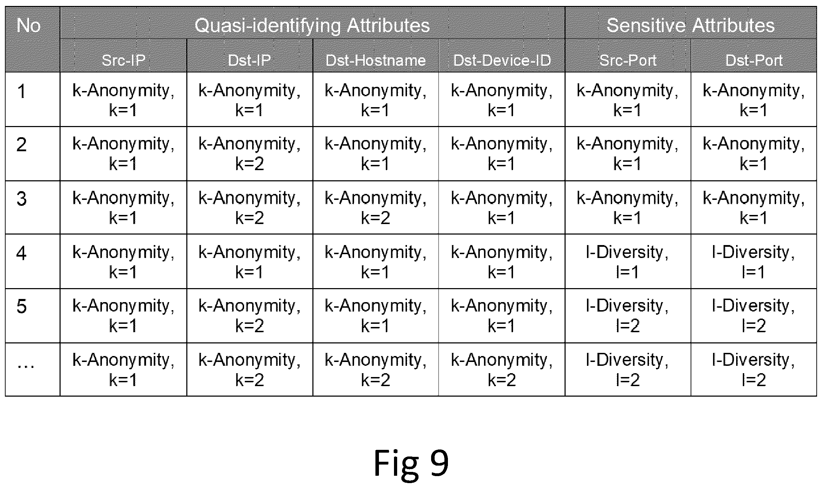

Figure 9 shows an example of available privacy settings for an analytics function. In this example the parameter value (e.g. k value for k-Anonymity) can be changed, such as incremented or decremented, for each attribute in order to create a new privacy setting. It is anticipated that the list of unique privacy settings will get longer as the process is repeated multiple times. The number of possible privacy settings is very large, but at some point adjusting or tweaking the privacy settings further (e.g. incrementing the k value in k-Anonymity) will not change or improve the outcome (e.g. re-identification risk) considerably. This will be taken into account during the risk assessment process.

Several methods are available for assessing the risk of re-identification and any such method may be used in any embodiment as appropriate. See, for example, Dankar FK, El Emam K, Neisa A, Roffey T, "Estimating the re-identification risk of clinical data sets", BMC Med Inform Decis Mak 2012; 12:66.

As an example, in general for an attacker who wants to identify a single entity given some background knowledge about a quasi-identifying attribute, the overall probability of re-identification can be computed as the minimum value of $1/f_i$ across all equivalence classes:

$$R = \frac{1}{\min(f_i)}$$

An equivalence class is defined to be a set of records that have the same values for the (anonymised) quasi-identifiers, whereas $f_i$ is the number of records in an equivalence class.

The computed re-identification risk will be specific to the type of analytics functions since they require a certain set of attributes (e.g. source IP, source hostname, etc.) to be available in the dataset. Furthermore it is also possible that the privacy/identity of more than one entity should be protected from a given dataset. For example, a complete Firewall log will contain data that may identify the source as well as the destination of the traffic. Each may have different privacy requirements that need to be satisfied, e.g. the destination entity may need a higher privacy protection level than the source entity. The re-identification risk for each type of entity should thus be computed separately. This means that there will be separate privacy scores for each type of entity, e.g. $P_{src}$, $P_{dst}$, etc.

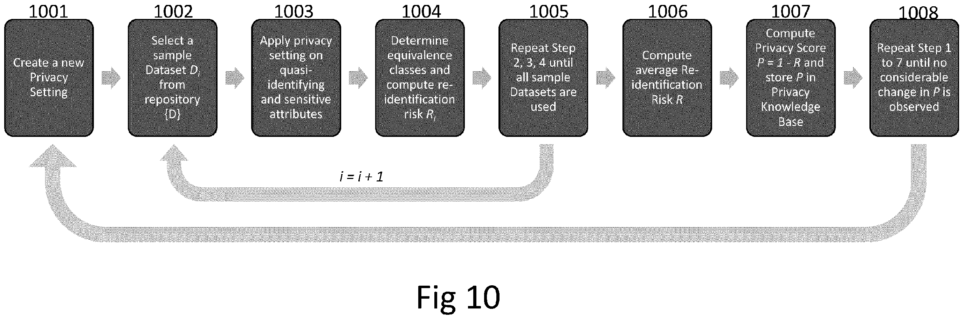

Figure 10 shows an example of a method for calculating the re-identification risks (and thus the privacy scores) for each analytics function.

At step 1001 a new privacy setting is created according to the procedure described earlier. It may start from the lowest privacy setting, e.g. in case of k-Anonymity the k value is set to 1.

At step 1002 a sample dataset $D_i$ is selected from repository {D}, where $i = 1$ *to* n with n being the total number of sample datasets in the repository. All the samples should be usable for the selected analytics function, i.e. they contain all the attributes required by the analytics function.

At step 1003 the quasi-identifying and sensitive attributes of each record are anonymised using the selected privacy setting.

At step 1004 equivalence classes are determined from the anonymised records and the re-identification risk $R_i$ is computed; as mentioned earlier more than one re-identification risk values may exist, with there being a re-identification risk provided for respective different attributes, e.g. $R_{src,i}$, $R_{dst,i}$, etc.

At step 1005, step 1002, 1003 and 1004 are repeated for the next sample dataset $D_{i=i+1}$ until $i = n$.

At step 1006 the overall re-identification risk R can then be derived as the mean average over the computed re-identification risk values (i.e. $R_1 ... R_n$) from all sample datasets $D_1 ... D_n$.

At step 1007 the corresponding privacy score P = 1 - R is then stored into the Privacy Knowledge Base for the selected privacy setting.

At step 1008 steps 1001 to 1007 are repeated again (i.e. with a new privacy setting) until no considerable change in the computed privacy scores can be observed any longer. In particular, steps 1001 to 1007 may be repeated until the change in computed privacy scores between successive iterations is below a threshold level.

The privacy score calculation is thus completed for a given analytics function. Additional privacy score calculations (using the same approach) are produced as needed for other analytics functions in case they require anonymisation for different sets of (quasi-identifying and sensitive) attributes. Otherwise they can share the same privacy scores for the corresponding privacy settings.

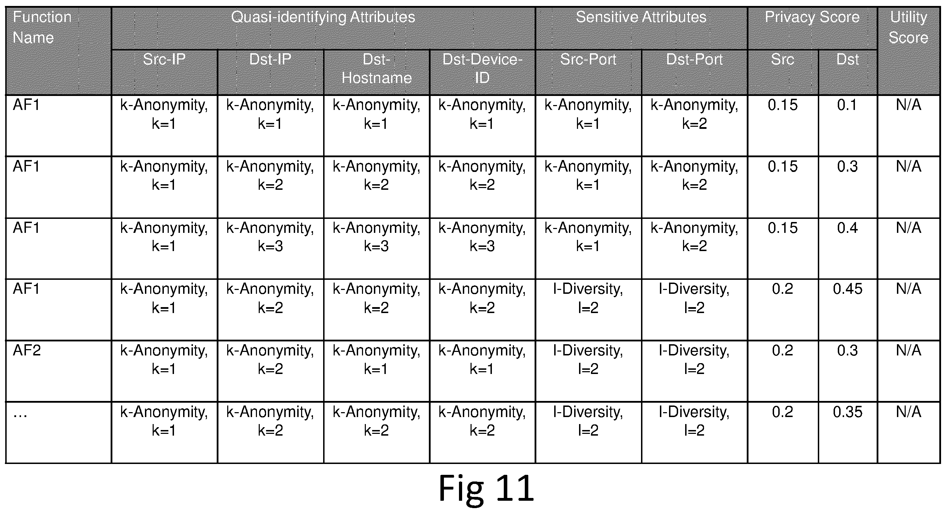

At this point privacy score(s) has been assigned to each privacy setting and analytics function, and populated in the Privacy Knowledge Base, as for example shown in Figure 11. The outstanding data utility scores then need to be calculated based on the quality of results produced by each analytics function. Since analytics functions may consume the (anonymised) data in different ways the observed data utility may be different too. Only one data utility score should be computed even if there are multiple privacy scores available.

The data utility can be calculated in any appropriate way. For example, it may be determined by comparing an analysis result with the (reference) result that could have been produced by the same analytics function if the anonymisation were switched off, i.e. no privacy setting was applied on any quasi-identifying and sensitive attributes. Analysis results can generally be expressed in *numerical* or *categorical* values. Examples of numerical values include *number of malicious hosts, percentage of infected machines, frequency of failed logins per hour,* etc. Examples of categorical values include *most attacked destination port of service, host or IP address with suspicious activities,* etc.

The *relative error* $\eta$ can be used as a measure to compare the results, where:

$$\eta = \left| 1 - \frac{v_{on}}{v_{off}} \right|$$

Value $v_{on}$ is the result obtained from anonymised data, and $v_{off} \neq 0$ is the (reference) result obtained from original data (i.e. without anonymisation).

In case of results with categorical values the relative error could measure the level of "blurriness" or inaccuracy caused by the anonymisation process, as described in the following example. Assume that an analytics function should identify the *IP address with suspicious activities* from input dataset. In the original data (without anonymisation) the analytics function may have identified an IP address that was shown or present in 50 records. But in the anonymised dataset there were 60 records associated with the (anonymised) IP address that has been determined as showing suspicious activities (e.g. due to the application of k-Anonymity model). In this case $v_{off}$ would then be set to 50 and $v_{on}$ set to 60 in order to compute the relative error $\eta$.

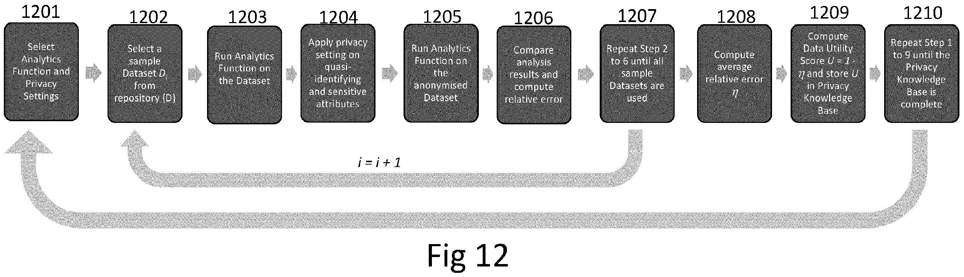

Using the (incomplete) Privacy Knowledge Base with populated privacy scores, such as the example of Figure 11, the data utility scores can be determined as shown in Figure 12:

At step 1201 a combination of analytics function and privacy setting is selected from the Privacy Knowledge Base table.

At step 1202 sample dataset $D_i$ is selected from the repository {D}, where i = 1 *to* n with n is the total number of sample datasets in the repository. The samples repository may be identical with the one used for calculating the privacy scores. Hence all the samples should be usable for the selected analytics function, i.e. they contain all the attributes required by the function.

At step 1203 the selected dataset with original values (not anonymised) is inputted to the analytics function to produce the result $v_{off,i}$.

At step 1204 the selected dataset is then anonymised by applying the privacy setting (i.e. choice of algorithms and parameters) on its quasi-identifying and sensitive attributes.

At step 1205 the anonymised dataset is then inputted to the analytics function to produce the result $v_{on,i}$.

At step 1206 the relative error $\eta_i$ is then computed as follows:

$$\eta_i = \left| 1 - \frac{v_{on,i}}{v_{off,i}} \right|$$

At step 1207 steps 1202 to 1206 are repeated for the next sample dataset $D_{i=i+1}$ until $i = n$.

At step 1208 the overall relative error $\eta$ can then be derived as the mean average over all the relative error values (i.e. $\eta_1 ... \eta_n$) computed from sample datasets $D_1 ... D_n$.

At step 1209 the corresponding data utility score *U* = 1 - $\eta$ is then stored into the Privacy Knowledge Base for the given combination of analytics function and privacy settings.

At step 1210 steps 1201 to 1209 are repeated again (i.e. with new combination of analytics function and privacy setting each time) until the entire Privacy Knowledge Base is complete, i.e. all the data utility scores are populated.

The main objective of using the Privacy Knowledge Base is to strike a good balance between privacy and utility, i.e. to achieve the highest possible privacy level at the least cost of data utility. In order facilitate this the completed Privacy Knowledge Base (PKB) can be further consolidated by adhering to the principle of inverse relationship between privacy and utility.

As an example, consolidation may be provided by the following method:

Step 1: each record represents a unique combination of analytics function, privacy setting, privacy score and utility score. The records are then grouped by their analytics function name or identifier.

Step 2: each group/list is sorted by the highest data utility scores first; the record with the highest utility score $U_{j=0} = U_{max}$ should have the lowest privacy score $P_{j=0} = P_{min}$ within the group, whereas $j = 0 \ldots m$ and m is the total number of all records in the group.

Step 3: for each of the subsequent records with decreasing or lower utility score $U_{j+1}$, the corresponding privacy score $P_{j+1}$ is compared with the preceding record's $P_j$. In case $P_{j+1} \leq P_j$ and $U_{j+1} \leq U_j$ that (subsequent) $(j + 1)$-th record is removed from the group as it contradicts against the inverse relationship principle.

The consolidation procedure is performed through all the groups and records within the Privacy Knowledge Base. **Error! Reference source not found,** shows an example of a Privacy Knowledge Base before and after consolidation.

The same principle also applies if there are multiple privacy scores available for each unique combination. In this case the privacy scores comparison (step 3 above) should be done separately for each type of entity, e.g. $P_{src,j}$ compared with $P_{srcj+1}$. However only if the inverse relationship test failed for each type of entity, e.g. $P_{src,j+1} \leq P_{src,j}$ and $P_{dst,j+1} \leq P_{dst,j}$, the corresponding (subsequent) record is removed from the Privacy Knowledge Base.

Any of the embodiments described herein can be applied as a supplementary feature to known privacy models for configuring and tuning the models to ensure the results of analytics faithfully corresponds to input data while providing for privacy in the input data.

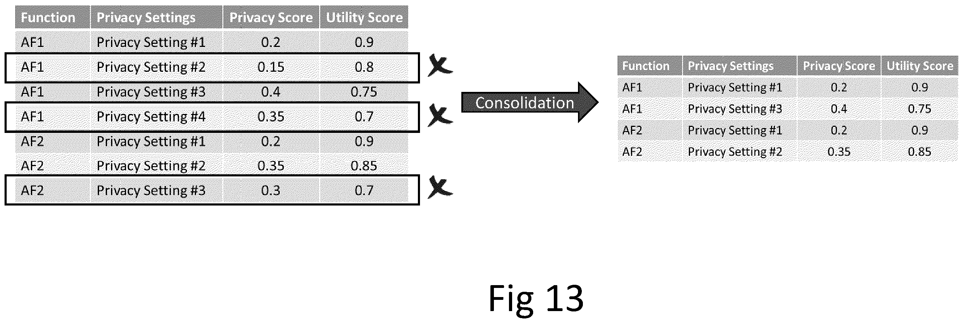

The resulting stored and ranked results produced according to the described method and shown, for example, in Figure 13, may be provided for subsequent selection and use by the computer system to process an anonymized set of data, anonymized according to an identified anonymization protocol, according to the analysis function.

It will be understood by those skilled in the art that the apparatus that embodies the invention could be a general purpose device (or group of devices) having software arranged to provide an embodiment of the invention. Furthermore, any or all of the software used to implement the invention can be contained on various storage mediums such as a floppy disc, CD-ROM, or magnetic tape so that the program(s) can be loaded onto one or more general purpose devices, or could be downloaded over a network.

The computer-implemented method described above may be implemented in a form of computer program. The computer program may be stored in at least one memory of at least one computer system. The computer system may also comprise at least one processor configured to perform the computer program. Optionally, the computer system may be connected to and/or form a part of the computer network.

**Claims**

1. A computer-implemented method for use in anonymizing data, the data having a plurality of data attributes;

the method being performed by a computer system configured to provide anonymized data to a plurality of different analysis functions for analyzing the data, the data being anonymized by applying one or more of a plurality of predetermined anonymization protocols, each protocol having an anonymization protocol parameter that can be specified in order to determine the degree of anonymization applied to the data; the method comprising:

determining, for each analysis function:

- privacy settings, each comprising a unique combination of anonymization protocol applied to the data, anonymization protocol parameter value and data attribute;
- a privacy score for each of the determined unique combinations of anonymization protocol applied to the data, anonymization protocol parameter value and data attribute; and
- a data utility score for each of the determined unique combinations of anonymization protocol applied to the data, anonymization protocol parameter value and data attribute;

processing the results, for each analysis function, by:

- ranking the unique combinations of anonymization protocol, anonymization protocol parameter and data attribute based on the privacy score and/or data utility score; and
- storing the ranked results for subsequent selection and use by the computer system to process an anonymized set of data, anonymized according to an identified anonymization protocol, according to the analysis function.

2. The method of claim 1 wherein determining a privacy score for each of the determined unique combinations of anonymization protocol applied to the data, anonymization protocol parameter value and data attribute comprises:
computing the re-identification risk, R, based on the statistic distribution of the relevant data attribute values within an example dataset and determining the privacy score based on the re-identification risk.

3. The method of claim 2 wherein the re-identification risk is computed as the minimum value of $1/f_i$ across all equivalence classes:

$$R = \frac{1}{\min(f_i)}$$

wherein an equivalence class is defined to be a set of data records that have the same values for anonymised quasi-identifiers and wherein $f_i$ is the number of records in an equivalence class.

4. The method of any preceding claim wherein determining a privacy score for each analysis function comprises, for each privacy setting:

    i) selecting a sample dataset, $D_i$, from a repository $\{D\}$, where $i = 1$ *to n* with *n* being the total number of sample datasets in the repository;
    ii) anonymising the data of each data record using the selected anonymization protocol;
    iii) determining, from the anonymised data records, equivalence classes and determining, from the anonymised records, a dataset value, $R_i$, indicative of privacy score;
    iv) repeating steps i to iii for the next sample dataset $D_{i=i+1}$ until $i = n$;
    v) determining an overall value, R, indicative of privacy score over all sample datasets based on the individual dataset values, $R_i$;
    vi) determining a privacy score, P = 1 - R, based on the overall value R;
    vii) storing the privacy score for the selected privacy setting.

5. The method of any preceding claim wherein determining a data utility score for each analysis function comprises, for each privacy setting:
comparing an analysis result with a reference result that would have been produced by the same analysis function if no privacy setting was applied.

6. The method of any preceding claim wherein determining a data utility score for each analysis function comprises:

    i) selecting a combination of an analysis function and privacy setting;
    ii) selecting a sample dataset $D_i$ from a repository $\{D\}$, where $i = 1$ *to n* with *n* being the total number of sample datasets in the repository;
    iii) inputting the selected dataset with original, non-anonymised, values to the analysis function to produce a first result $v_{off,i}$;
    iv) anonymising the selected dataset by applying the privacy setting;
    v) inputting the anonymised dataset to the analytics function to produce a second result $v_{on,i}$;
    vi) determining a dataset value indicative of the data utility based on the first and second result;
    vii) repeating steps ii to vi for the next sample dataset $D_{i=i+1}$ until $i$ = n;
    viii) determining an overall value, $\eta$, indicative of the data utility score over all sample datasets based on the individual dataset values;
    ix) determining a data utility score, $U = 1 - \eta$, based on the overall value, $\eta$,
    x) storing the determined data utility score for the given combination of analysis function and privacy settings.
    xi) repeating steps i to x with a new combination of analysis function and privacy setting until all the data utility scores are populated.

7. The method of any preceding claim wherein processing the results further comprises:
consolidating the stored results based on an inverse relationship between privacy score and utility score by removing results that do not adhere to the inverse relationship.

8. The method of claim 7 wherein consolidating the stored results comprises:

    sorting the results obtained for each analysis function according to data utility scores;
    for each subsequent result with a lower utility score, comparing the corresponding privacy score with the preceding result's privacy score;
    where the privacy score for the subsequent result is less than or equal to the preceding result's privacy score, and where the utility score for the subsequent result is less than the preceding result's privacy score, removing that subsequent record from the results.

9. The method of any preceding claim further comprising grouping the results according to each analysis function.

10. The method of any preceding claim wherein the anonymised data provided to the analysis functions originates from a plurality of different data sources.

11. The method of any preceding claim wherein the data provided to the analysis functions is anonymised according to one or more user defined privacy policies, the privacy policies indicating whether data attributes should be provided in plain text or anonymised form.

12. The method of any preceding claim wherein the predetermined anonymization protocols include one or more of k-Anonymity, 1-Diversity, t-Closeness, $(\varepsilon,\delta)$-Differential Privacy, $\beta$-Likeness and $\delta$-Presence.

13. The method of any preceding claim further comprising receiving an input selecting a ranked result and processing an incoming anonymized set of data according to the associated analysis function, anonymization protocol and anonymization protocol parameter.

14. A computer system configured to perform the method of any of claims 1 to 13.

15. A non-transitory computer readable medium having stored thereon a computer program that, when run on a system according to claim 14, causes the system to perform the method of any of claims 1 to 13; and/or a computer program that, when run on a system according to claim 14, causes the system to perform the method of any of claims 1 to 13.

| Data type | Attribute | Visibility |
|---|---|---|
| IDS Log | SrcIP | P |
| | DestIP | A |
| | SrcPort | P |
| | DstPort | A |
| | Signature | P |
| Proxy Log | SrcIP | A |
| | DestIP | P |
| | URL | P |
| | BytesOut | R |
| | BytesIn | R |

R: Removed (not shared)     A: Shared in anonymised form
P: Shared in plain text

# Fig 1

201

## Original Patients Data

| | ZIP Code | Age | Disease |
|---|---|---|---|
| 1 | 47677 | 29 | Heart Disease |
| 2 | 47602 | 22 | Heart Disease |
| 3 | 47678 | 27 | Heart Disease |
| 4 | 47905 | 43 | Flu |
| 5 | 47909 | 52 | Heart Disease |
| 6 | 47906 | 47 | Cancer |
| 7 | 47605 | 30 | Heart Disease |
| 8 | 47673 | 36 | Cancer |
| 9 | 47607 | 32 | Cancer |

203

## Anonymized Patients Data

| | ZIP Code | Age | Disease |
|---|---|---|---|
| 1 | 476** | 2* | Heart Disease |
| 2 | 476** | 2* | Heart Disease |
| 3 | 476** | 2* | Heart Disease |
| 4 | 4790* | $\geq 40$ | Flu |
| 5 | 4790* | $\geq 40$ | Heart Disease |
| 6 | 4790* | $\geq 40$ | Cancer |
| 7 | 476** | 3* | Heart Disease |
| 8 | 476** | 3* | Cancer |
| 9 | 476** | 3* | Cancer |

# Fig 2

EP 4 398 140 A1

| Privacy Model | Identity Disclosure Protection | Attribute Disclosure Protection | Membership Disclosure Protection |
|---|---|---|---|
| k-Anonymity | ✓ | | |
| l-Diversity | | ✓ | |
| t-Closeness | | ✓ | |
| $(\varepsilon,\delta)$-Differential Privacy | | | ✓ |
| β-Likeness | | ✓ | |
| δ-Presence | | | ✓ |

<p align="center">Fig 3</p>

Fig 4

523

Results

515 AF1
517 AF2
519 AF3
521 AF4

e.g. Cyber Intelligence

Aggregated Data

501 Data Sharing & Analytics Platform

Analytics Functions AF1... AFx

531 Privacy Knowledge Base

525 Policy
Data
509 Data Owner A

Policy
527 Data
511 Data Owner B

Policy
529 Data
513 Data Owner C

503

505

507

Fig 5

| Function Name | Quasi-identifying | Sensitive | Privacy Score | Data Utility Score |
|---|---|---|---|---|
| Analytics Function 1 | k-Anonymity, k=5 | l-Diversity, l=4 | 0.7 | 0.4 |
| Analytics Function 1 | k-Anonymity, k=4 | l-Diversity, l=4 | 0.5 | 0.5 |
| Analytics Function 1 | k-Anonymity, k=3 | l-Diversity, l=3 | 0.35 | 0.7 |
| Analytics Function 2 | k-Anonymity, k=5 | l-Diversity, l=4 | 0.8 | 0.5 |
| Analytics Function 2 | k-Anonymity, k=4 | l-Diversity, l=4 | 0.5 | 0.7 |

Fig 6

| Function Name | Quasi-identifying Attributes | | | | Sensitive Attributes | | Privacy Score | Data Utility Score |
|---|---|---|---|---|---|---|---|---|
| | Src-IP | Dst-IP | Dst-Hostname | Dst-Device-ID | Src-Port | Dst-Port | | |
| AF 1 | k=1 | k=5 | k=5 | k=5 | l=2 | l=3 | 0.7 | 0.4 |
| AF 1 | k=1 | k=4 | k=4 | k=4 | l=2 | l=3 | 0.55 | 0.5 |
| AF 1 | k=1 | k=5 | k=5 | k=5 | l=2 | l=4 | 0.5 | 0.55 |
| AF 1 | k=1 | k=4 | k=4 | k=4 | l=2 | l=4 | 0.4 | 0.6 |
| AF 2 | k=1 | k=3 | k=3 | k=3 | l=2 | l=3 | 0.5 | 0.5 |
| AF 2 | k=1 | k=2 | k=2 | k=2 | l=2 | l=4 | 0.4 | 0.7 |

# Fig 7

EP 4 398 140 A1

EP 4 398 140 A1

801

803

Privacy Score Calculation through Risk Assessment

Data Utility Score Calculation

↑ Privacy Settings

↑ Data

↑ Analytics Functions

↑ Data

**Privacy Models Assessment (PMA)**

Privacy Knowledge Base

| Function | Quasi-identifying | Sensitive | Privacy Score | Data Utility Score |
|---|---|---|---|---|
| Analytics Function 1 | k-Anonymity, k=5 | l-Diversity, l=4 | 0.7 | 0.4 |
| Analytics Function 1 | k-Anonymity, k=4 | l-Diversity, l=4 | 0.5 | 0.5 |
| Analytics Function 1 | k-Anonymity, k=4 | l-Diversity, l=3 | 0.4 | 0.6 |
| Analytics Function 1 | k-Anonymity, k=3 | l-Diversity, l=3 | 0.35 | 0.7 |
| Analytics Function 2 | k-Anonymity, k=5 | l-Diversity, l=4 | 0.8 | 0.5 |
| Analytics Function 2 | k-Anonymity, k=4 | l-Diversity, l=4 | 0.5 | 0.7 |

Overall score table based on
analytics functions and
sample data

Fig 8

| No | Quasi-identifying Attributes | | | | Sensitive Attributes | |
|---|---|---|---|---|---|---|
| | Src-IP | Dst-IP | Dst-Hostname | Dst-Device-ID | Src-Port | Dst-Port |
| 1 | k-Anonymity, k=1 | k-Anonymity, k=1 | k-Anonymity, k=1 | k-Anonymity, k=1 | k-Anonymity, k=1 | k-Anonymity, k=1 |
| 2 | k-Anonymity, k=1 | k-Anonymity, k=2 | k-Anonymity, k=1 | k-Anonymity, k=1 | k-Anonymity, k=1 | k-Anonymity, k=1 |
| 3 | k-Anonymity, k=1 | k-Anonymity, k=2 | k-Anonymity, k=2 | k-Anonymity, k=1 | k-Anonymity, k=1 | k-Anonymity, k=1 |
| 4 | k-Anonymity, k=1 | k-Anonymity, k=1 | k-Anonymity, k=1 | k-Anonymity, k=1 | l-Diversity, l=1 | l-Diversity, l=1 |
| 5 | k-Anonymity, k=1 | k-Anonymity, k=2 | k-Anonymity, k=1 | k-Anonymity, k=1 | l-Diversity, l=2 | l-Diversity, l=2 |
| ... | k-Anonymity, k=1 | k-Anonymity, k=2 | k-Anonymity, k=2 | k-Anonymity, k=2 | l-Diversity, l=2 | l-Diversity, l=2 |

Fig 9

**1001**

Create a new Privacy Setting

**1002**

Select a sample Dataset $D_i$ from repository {D}

**1003**

Apply privacy setting on quasi-identifying and sensitive attributes

**1004**

Determine equivalence classes and compute re-identification risk $R_i$

**1005**

Repeat Step 2, 3, 4 until all sample Datasets are used

**1006**

Compute average Re-identification Risk $R$

**1007**

Compute Privacy Score $P = 1 - R$ and store $P$ in Privacy Knowledge Base

**1008**

Repeat Step 1 to 7 until no considerable change in $P$ is observed

$i = i + 1$

# Fig 10

| Function Name | Quasi-identifying Attributes | | | | Sensitive Attributes | | Privacy Score | | Utility Score |
|---|---|---|---|---|---|---|---|---|---|
| | Src-IP | Dst-IP | Dst-Hostname | Dst-Device-ID | Src-Port | Dst-Port | Src | Dst | |
| AF1 | k-Anonymity, k=1 | k-Anonymity, k=1 | k-Anonymity, k=1 | k-Anonymity, k=1 | k-Anonymity, k=1 | k-Anonymity, k=2 | 0.15 | 0.1 | N/A |
| AF1 | k-Anonymity, k=1 | k-Anonymity, k=2 | k-Anonymity, k=2 | k-Anonymity, k=2 | k-Anonymity, k=1 | k-Anonymity, k=2 | 0.15 | 0.3 | N/A |
| AF1 | k-Anonymity, k=1 | k-Anonymity, k=3 | k-Anonymity, k=3 | k-Anonymity, k=3 | k-Anonymity, k=1 | k-Anonymity, k=2 | 0.15 | 0.4 | N/A |
| AF1 | k-Anonymity, k=1 | k-Anonymity, k=2 | k-Anonymity, k=2 | k-Anonymity, k=2 | l-Diversity, l=2 | l-Diversity, l=2 | 0.2 | 0.45 | N/A |
| AF2 | k-Anonymity, k=1 | k-Anonymity, k=2 | k-Anonymity, k=1 | k-Anonymity, k=1 | l-Diversity, l=2 | l-Diversity, l=2 | 0.2 | 0.3 | N/A |
| ... | k-Anonymity, k=1 | k-Anonymity, k=2 | k-Anonymity, k=2 | k-Anonymity, k=2 | l-Diversity, l=2 | l-Diversity, l=2 | 0.2 | 0.35 | N/A |

Fig 11

**1201** Select Analytics Function and Privacy Settings

**1202** Select a sample Dataset $D_i$ from repository {D}

**1203** Run Analytics Function on the Dataset

**1204** Apply privacy setting on quasi-identifying and sensitive attributes

**1205** Run Analytics Function on the anonymised Dataset

**1206** Compare analysis results and compute relative error

**1207** Repeat Step 2 to 6 until all sample Datasets are used

**1208** Compute average relative error $\eta$

**1209** Compute Data Utility Score $U = 1 - \eta$ and store $U$ in Privacy Knowledge Base

**1210** Repeat Step 1 to 9 until the Privacy Knowledge Base is complete

$i = i + 1$

Fig 12

| Function | Privacy Settings | Privacy Score | Utility Score |
|---|---|---|---|
| AF1 | Privacy Setting #1 | 0.2 | 0.9 |
| AF1 | Privacy Setting #2 | 0.15 | 0.8 |
| AF1 | Privacy Setting #3 | 0.4 | 0.75 |
| AF1 | Privacy Setting #4 | 0.35 | 0.7 |
| AF2 | Privacy Setting #1 | 0.2 | 0.9 |
| AF2 | Privacy Setting #2 | 0.35 | 0.85 |
| AF2 | Privacy Setting #3 | 0.3 | 0.7 |

Consolidation →

| Function | Privacy Settings | Privacy Score | Utility Score |
|---|---|---|---|
| AF1 | Privacy Setting #1 | 0.2 | 0.9 |
| AF1 | Privacy Setting #3 | 0.4 | 0.75 |
| AF2 | Privacy Setting #1 | 0.2 | 0.9 |
| AF2 | Privacy Setting #2 | 0.35 | 0.85 |

## Fig 13

EP 4 398 140 A1

**EP 4 398 140 A1**

Europäisches
Patentamt
European
Patent Office
Office européen
des brevets

# EUROPEAN SEARCH REPORT

Application Number

EP 23 15 0282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/266353 A1 (GKOULALAS-DIVANIS ARIS [US]) 29 August 2019 (2019-08-29) * paragraphs [0036], [0038], [0039], [0041], [0044], [0047] * ----- | 1-15 | INV. G06F21/62 H04L9/40 |
| X | WO 2020/222140 A1 (ERICSSON TELEFON AB L M [SE]; JARRAYA YOSR [CA] ET AL.) 5 November 2020 (2020-11-05) * paragraphs [0089] – [0093] * ----- | 1,14,15 | |
| X | US 2019/258824 A1 (GKOULALAS-DIVANIS ARIS [US]) 22 August 2019 (2019-08-22) * paragraph [0048] * ----- | 1,14,15 | |
| | | | TECHNICAL FIELDS SEARCHED (IPC) G06F H04L |

The present search report has been drawn up for all claims

| Place of search | Date of completion of the search | Examiner |
|---|---|---|
| Munich | 16 June 2023 | Frank, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 23 15 0282

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2023

| Patent document cited in search report | | Publication date | Patent family member(s) | | Publication date |
|---|---|---|---|---|---|
| US 2019266353 | A1 | 29-08-2019 | US | 2019266353 A1 | 29-08-2019 |
| | | | US | 2019303618 A1 | 03-10-2019 |
| WO 2020222140 | A1 | 05-11-2020 | US | 2022215127 A1 | 07-07-2022 |
| | | | WO | 2020222140 A1 | 05-11-2020 |
| US 2019258824 | A1 | 22-08-2019 | US | 2019258824 A1 | 22-08-2019 |
| | | | US | 2019303616 A1 | 03-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DANKAR FK ; EL EMAM K ; NEISA A ; ROFFEY T.** Estimating the re-identification risk of clinical data sets. *BMC Med Inform Decis Mak,* 2012, vol. 12, 66